# EUROPÄISCHE PATENTSCHRIFT

(11) **EP 2 582 028 B1**
(45) Veröffentlichungstag und Bekanntmachung des Hinweises auf die Patenterteilung: **28.04.2021**
(21) Anmeldenummer: 12006899.4
(22) Anmeldetag: 04.10.2012
(51) Int. Cl.: H02M 7/487, H02M 7/539, H02M 7/48

(54) **Verfahren zum Betreiben eines Wechselrichters und Wechselrichterschaltung**
Method for operating an inverter and inverter circuit
Procédé destiné au fonctionnement d'un onduleur et circuit d'onduleur

(30) Priorität: 12.10.2011 DE 102011115728
(43) Veröffentlichungstag der Anmeldung: 17.04.2013
(73) Patentinhaber: SEW-EURODRIVE GmbH & Co. KG, 76646 Bruchsal (DE)
(72) Erfinder: Bertelsmann, Götz-Martin, 88239 Wangen (DE)
(74) Vertreter: Tüngler, Eberhard

(56) Entgegenhaltungen:
- DE-A1-102005 024 465
- DE-A1-102007 058 633

## Beschreibung

Die vorliegende Erfindung betrifft ein Verfahren zum Betreiben eines Wechselrichters, insbesondere eines NPC-Wechselrichters, und eine entsprechende Wechselrichterschaltung, insbesondere eine NPC-Wechselrichterschaltung.

Neutral-Point-Clamp (NPC) - Wechselrichter(schaltungen) zum Umwandeln einer Gleichspannung in eine Wechselspannung sind zum Beispiel aus der DE 101 31 961 A1 oder der EP 1 861 914 B1 in verschiedenen Ausführungsformen bekannt. Grundsätzlich enthalten solche NPC-Wechselrichterschaltungen einen Gleichspannungszwischenkreis, der eine Reihenschaltung aus einem ersten und einem zweiten Zwischenkreiskondensator zwischen einem ersten und einem zweiten Gleichspannungsanschluss aufweist; wenigstens einen Brückenzweig, der eine Reihenschaltung aus einem ersten und einem zweiten Schaltelement zwischen dem ersten und dem zweiten Gleichspannungsanschluss aufweist, wobei dem ersten und dem zweiten Schaltelement eine erste bzw. eine zweite Diode mit zueinander gleichen Durchlassrichtungen antiparallel geschaltet sind; wenigstens einen Freilaufkreis, der eine Reihenschaltung oder Parallelschaltung aus einem dritten und einem vierten Schaltelement zwischen einem gemeinsamen Gleichspannungsknotenpunkt des Gleichspannungszwischenkreises und einem gemeinsamen Wechselspannungsknotenpunkt des Brückenzweiges aufweist, wobei dem dritten und dem vierten Schaltelement eine dritte bzw. eine vierte Diode mit zueinander entgegengesetzten Durchlassrichtungen antiparallel geschaltet sind und eine Taktung der Schaltelemente des Freilaufkreises einer Taktung der Schaltelemente des Brückenzweiges entspricht; einen ersten Wechselspannungsanschluss, der mit dem Gleichspannungsknotenpunkt verbunden ist; und einen zweiten Wechselspannungsanschluss, der mit dem Wechselspannungsknotenpunkt verbunden ist.

Üblicherweise werden für die Zwischenkreiskondensatoren im Wesentlichen gleichartige Kondensatoren eingesetzt, sodass sich im Idealfall ein zum Gleichspannungsknotenpunkt symmetrischer Zwischenkreis ergibt. In diesem Fall wird in den verschiedenen Halbwellen des Wechselrichters aus den Zwischenkreishälften in gleichem Maße Energie entnommen und so eine ideale sinusförmige Wechselspannung an den Wechselspannungsanschlüssen erzeugt. In der Praxis ist jedoch ein exakt symmetrischer Zwischenkreis insbesondere auch über die Einsatzdauer der Wechselrichterschaltung hinweg nicht realisierbar. Um einen solchen realen Zwischenkreis zumindest annähernd zu symmetrieren, wurde herkömmlicherweise zum Beispiel durch eine Veränderung der Amplitude des Brückenzweigstroms in den verschiedenen Halbwellen des Wechselrichters unterschiedlich viel Energie aus den Zwischenkreishälften entnommen. Dies führt jedoch zu einem wenn auch nur sehr kleinen Gleichstrom, der bei am Wechsel-spannungsausgang angeschlossenen Induktivitäten selbige schnell in Sättigung führen kann.

Die DE 10 2005 024 465 A1 offenbart eine Schaltungsanordnung und ein Steuerungsverfahren für einen Wechselrichter mit zwei Gleispannungsquellen und zwei diesen parallen geschalteten Zwischenkreiskondensatoren, wobei ein Verbindungspunkt zwischen den Gleichspannungsquellen und ein Verbindungspunkt zwischen den Zwischenkreiskondensatoren an einen Neutralleiter angeschlossen ist, und mit der Möglichkeit einer Leistungskompensation zwischen den zwei Gleichspannungszweigen.

Es ist eine Aufgabe der vorliegenden Erfindung, ein verbessertes Verfahren zum Betreiben eines Wechselrichters, insbesondere eines NPC-Wechselrichters zu schaffen, mit welchem der Gleichspannungszwischenkreis für eine Gleichspannungsquelle auf einfache Weise symmetriert werden kann. Es ist eine weitere Aufgabe der vorliegenden Erfindung, eine verbesserte Wechselrichterschaltung, insbesondere NPC-Wechselrichterschaltung zu schaffen, deren Gleichspannungszwischenkreis für eine Gleichspannungsquelle auf einfache Weise symmetriert werden kann.

Die genannten Aufgaben werden gelöst durch ein Verfahren zum Betreiben eines Wechselrichters mit den Merkmalen des Anspruchs 1 bzw. eine Wechselrichterschaltung mit den Merkmalen des Anspruchs 7. Besonders bevorzugte Ausführungsformen und Weiterbildungen der Erfindung sind Gegenstand der abhängigen Ansprüche.

Das erfindungsgemäße Verfahren dient dem Betreiben eines Wechselrichters, insbesondere eines NPC-Wechselrichters, zum Umwandeln einer Gleichspannung einer Gleichspannungsquelle in eine Wechselspannung, der aufweist: einen Gleichspannungszwischenkreis, der eine Reihenschaltung aus einem ersten und einem zweiten Zwischenkreiskondensator zwischen einem ersten und einem zweiten Gleichspannungsanschluss der einen Gleichspannungsquelle aufweist; wenigstens einen Brückenzweig, der eine Reihenschaltung aus einem ersten und einem zweiten Schaltelement zwischen dem ersten und dem zweiten Gleichspannungsanschluss der einen Gleichspannungsquelle aufweist, wobei dem ersten und dem zweiten Schaltelement eine erste bzw. eine zweite Diode antiparallel geschaltet sind; wenigstens einen Freilaufkreis mit einem Schaltmittel zwischen einem gemeinsamen Gleichspannungsknotenpunkt des Gleichspannungszwischenkreises und einem gemeinsamen Wechselspannungsknotenpunkt des Brückenzweiges; einen ersten Wechselspannungsanschluss, der mit dem Gleichspannungsknotenpunkt verbunden ist; und einen zweiten Wechselspannungsanschluss, der mit dem Wechselspannungsknotenpunkt verbunden ist. Das Schaltmittel des Freilaufkreises und die Schaltelemente des Brückenzweiges werden dabei grundsätzlich im Takt einer negativen und einer positiven Halbwelle der Wechselspannung geöffnet und geschlossen, sodass eine Taktung des Schaltmittels des Freilaufkreises einer Taktung der Schaltelemente des Brückenzweiges entspricht. Ferner werden die Schaltelemente des Brückenzweiges abweichend von diesem grundsätzlichen Takt um einen Nulldurchgang von Wechselspannung und/oder -strom herum geöffnet. Außerdem werden die an den Zwischenkreiskondensatoren anliegenden Gleichspannungen oder Ladungen erfasst und wird das Schaltmittel des Freilaufkreises abweichend von diesem grundsätzlichen Takt im Bereich eines Nulldurchgangs der Wechselspannung und/oder des Wechselstroms geöffnet, falls eine Asymmetrie zwischen den Gleichspannungen oder Ladungen an den Zwischenkreiskondensatoren erfasst wird.

Der Aufbau der Wechselrichterschaltung entspricht grundsätzlich dem einer bekannten Wechselrichterschaltung. Um den Wirkungsgrad der Wechselrichterschaltung insbesondere im Bereich kleiner Leistungsabgaben zu erhöhen, wird die Taktung der Schaltelemente des Brückenzweiges um einen Nulldurchgang von Wechselspannung und/oder -strom herum verändert, indem die Schaltelemente geöffnet werden. Ein solches Abschalten der Taktung der Schaltelemente des Brückenzweigs um einen Nulldurchgang der Wechselspannung ist bereits aus der DE 10 2007 058 633 A1 der Anmelderin bekannt.

Erfindungsgemäß wird zudem vorgeschlagen, die an den Zwischenkreiskondensatoren anliegenden Gleichspannungen oder Ladungen zu erfassen und die Taktung des Schaltmittels des Freilaufkreises im Bereich eines Nulldurchgangs der Wechselspannung und/oder des Wechselstroms zu verändern, indem das Schaltmittel geöffnet wird, falls eine Asymmetrie zwischen den Gleichspannungen oder Ladungen an den Zwischenkreiskondensatoren erfasst wird.

Dies bedeutet, dass das Schaltmittel des Freilaufkreises zur Symmetrierung des Gleichspannungszwischenkreises bei Phasengleichheit zwischen Strom und Spannung nicht exakt zum Nulldurchgang von Wechselspannung und/oder Wechselstrom eingeschaltet und/oder abgeschaltet wird, sondern leicht zeitversetzt. Dabei bestimmt die Entfernung vom Nulldurchgang die Menge der von einer Zwischenkreishälfte zur anderen transferierbaren Energie. Da der Strom in einer Halbbrücke des Brückenzweiges um den Nulldurchgang von Wechselspannung und/oder -strom herum sehr klein ist, wird auch nur ein geringer Energieanteil in zum Beispiel einer Speicherdrossel gespeichert. Von diesem wird dann auch nur ein Teil durch die bei abgeschalteter Taktung des Schaltmittels des Freilaufkreises (d.h. bei geöffnetem Schaltmittel) klassische Freilaufschaltung der Brückenkonfiguration über die Dioden des Brückenzweiges in die gegenüberliegende Zwischenkreishälfte transferiert. Sobald die gewünschte Energiemenge auf die andere Zwischenkreishälfte übertragen worden ist, über eine oder mehrere Halbwellen der Wechselspannung hinweg, wird wieder auf den normalen Betrieb der Wechselrichterschaltung umgeschaltet und der Freilaufkreis normal getaktet, was wieder für einen höheren Wirkungsgrad sorgt, da keine Energie mehr zurück zum Gleichspannungszwischenkreis gelangt. Der Regelalgorithmus zum Symmetrieren des Gleichspannungszwischenkreises muss nur eingreifen, wenn das grundsätzlich unvermeidbare Toleranzband der Asymmetrie zwischen den Zwischenkreishälften überschritten oder sich tendenziell daran angenähert wird.

Durch das Abschalten der Taktung des Schaltmittels des Freilaufkreises entstehen keinerlei zusätzliche Schalttätigkeiten, welche zu weiteren Verlusten in dem Schaltmittel führen würden, da deren Schaltzeitpunkt bei Bedarf lediglich variiert wird. Durch die Symmetrierung des Gleichspannungszwischenkreises nahe dem Nulldurchgang ist zudem eine sehr feine Dosierung des Energieausgleiches zwischen den Zwischenkreishälften möglich.

Das erfindungsgemäße Verfahren zur Symmetrierung des Gleichspannungszwischenkreises einer Wechselrichterschaltung ist ohne zusätzliche Schaltungskomponenten realisierbar. Außerdem kann auf eine Variierung der Amplituden in den Halbwellen der Wechselspannung verzichtet werden, sodass auch ein Aufprägen eines entsprechenden zusätzlichen Gleichspannungsanteils vermieden werden kann.

Das Verfahren der Erfindung ist bei einphasigen Wechselrichtern und auch bei mehrphasigen Wechselrichtern einsetzbar. Da bei dreiphasigen Wechselrichtern insgesamt bis zu sechs Zeitpunkte (Nulldurchgänge der Wechselspannung und/oder des Wechselstroms) für den Energietransfer von einer zur anderen Zwischenkreishälfte zur Verfügung stehen, existiert bei einem solchen Wechselrichter quasi lückenlos die Möglichkeit zur Symmetrierung des Gleichspannungszwischenkreises. Die Erfindung ist für NPC-Wechselrichtertopologien mit und ohne Mixed Voltage Schaltelementen geeignet.

Bei dem Schaltmittel des Freilaufkreises handelt es sich um eine Reihenschaltung und/oder Parallelschaltung aus einem dritten und einem vierten Schaltelement, wobei dem dritten und dem vierten Schaltelement eine dritte bzw. eine vierte Diode mit zueinander entgegengesetzten Durchlassrichtungen in Reihe oder parallel geschaltet sind, oder um einen bidirektionalen Schalter, beispielsweise einen Halbleiterschalter, wie einen High Electron Mobility Transistor (HEMT). Die Taktung des Schaltmittels des Freilaufkreises erfolgt abhängig vom benötigten Phasenwinkel zwischen Spannung und Strom.

Als Schaltelemente für die Wechselrichterschaltung können grundsätzlich beliebige Schaltelemente verwendet werden. Vorzugsweise werden Leistungsschaltelemente bzw. Halbleiter-Leistungsschaltelemente, bevorzugt verlustarme IGBT- oder FET-Schalter verwendet. Bei dem Wechselrichter kann es sich um einen transformatorlosen Wechselrichter oder um einen Wechselrichter mit einem spannungsanpassenden und/oder galvanisch trennenden Transformator handeln.

Der Wechselrichter weist wenigstens einen Brückenzweig auf; vorzugsweise enthält er einen Brückenzweig, zwei Brückenzweige oder drei Brückenzweige. Ebenso weist der Wechselrichter wenigstens einen Freilaufkreis auf; vorzugsweise enthält er einen Freilaufkreis, zwei Freilaufkreise oder drei Freilaufkreise. Vorzugsweise entspricht die Anzahl der Freilaufkreise der Anzahl der Brückenzweige und jedem Brückenzweig ist genau ein Freilaufkreis zugeordnet. Ein Brückenzweig weist wenigstens ein erstes und ein zweites Schaltelement in Reihenschaltung auf; ein Brückenzweig kann in diesem Zusammenhang somit zwei oder mehr Schaltelemente enthalten.

Unter dem Gleichspannungsknotenpunkt und dem Wechselspannungsknotenpunkt werden ein gemeinsamer Knotenpunkt der Verbindung zwischen den beiden Zwischenkreiskondensatoren des Gleichspannungszwischenkreises bzw. ein gemeinsamer Knotenpunkt der Verbindung zwischen den beiden Schaltelementen des Brückenzweiges verstanden. Mit anderen Worten liegt der Gleichspannungsknotenpunkt zwischen den zwei Zwischenkreishälften des Gleichspannungszwischenkreises und liegt der Wechselspannungsknotenpunkt zwischen zwei Schaltelementen eines Brückenzweiges bzw. der Brückenzweige. Der Gleichspannungsknotenpunkt bildet gleichzeitig den neutralen Punkt (Neutral Point Clamp) des Wechselrichters; er ist vorzugsweise mit dem Neutralleiter verbunden.

An die Wechselspannungsanschlüsse des Wechselrichters kann vorzugsweise ein Netz oder ein Verbraucher angeschlossen werden. Die Erfindung ist dabei für Wechselrichter zur Einspeisung in Netze mit zum Beispiel 16 2/3 Hz, 50 Hz, 60 Hz oder 400 Hz geeignet.

Die Taktung der Schaltelemente des Brückenzweiges und des Schaltmittels des Freilaufkreises bezeichnet ein abwechselndes Ein- und Ausschalten bzw. Umschalten des jeweiligen Schaltelements. Im herkömmlichen Normalbetrieb werden bei Phasengleichheit die Schaltelemente des Brückenzweiges und des Freilaufkreises jeweils mit einem Tastverhältnis von 50% angesteuert. Ein Abschalten der Taktung der Schaltelemente des Brückenzweiges bzw. des Freilaufkreises bedeutet dabei, dass die beiden Schaltelemente des Brückenzweiges bzw. des Freilaufkreises nicht getaktet werden, d.h. offen angesteuert werden.

Unter einer Asymmetrie zwischen den Gleichspannungen oder Ladungen an den Zwischenkreiskondensatoren wird in diesem Zusammenhang eine Asymmetrie bzw. ein Unterschied zwischen den beiden Gleichspannungen und/oder Ladungen verstanden, die/der eine vorbestimmte Toleranz überschreitet.

In einer bevorzugten Ausführungsform der Erfindung werden die Schaltelemente des Freilaufkreises im Bereich eines Nulldurchgangs der Wechselspannung und/oder des Wechselstroms geöffnet, falls ein Unterschied zwischen den erfassten Gleichspannungen oder Ladungen an den Zwischenkreiskondensatoren einen vorbestimmten Wert übersteigt.

In einer weiteren bevorzugten Ausführungsform der Erfindung wird das Öffnen der Schaltelemente des Freilaufkreises im Bereich eines Nulldurchgangs der Wechselspannung und/oder des Wechselstroms in Abhängigkeit von einem Ausmaß der erfassten Asymmetrie zwischen den Gleichspannungen oder Ladungen an den Zwischenkreiskondensatoren durchgeführt. Vorzugsweise wird die Symmetrierungsphase durch Abschalten der Taktung umso länger gewählt je größer die festgestellte Asymmetrie des Gleichspannungszwischenkreises ist.

In einer weiteren bevorzugten Ausführungsform der Erfindung wird das Öffnen der Schaltelemente des Brückenzweiges um einen Nulldurchgang von Wechselspannung und/oder -strom herum in Abhängigkeit von der an den Gleichspannungsanschlüssen anliegenden Gleichspannung und/oder der Ausgangsleistung des Wechselrichters durchgeführt. Zum Abschalten der Taktung der Schaltelemente des Brückenzweiges um einen Nulldurchgang von Wechselspannung und/oder -strom herum wird auf die bereits erwähnte DE 10 2007 058 633 A1 vollinhaltlich Bezug genommen.

In einer besonders vorteilhaften Weiterbildung des Verfahrens werden die Schaltelemente des Brückenzweiges und/oder das Schaltmittel des Freilaufkreises in der Halbwelle der Wechselspannung geöffnet, in welcher der Kondensator des Zwischenkreises mit der größeren Ladung und/oder Spannung entladen wird.

In einer weiteren Ausgestaltung des Verfahrens wird das Schaltmittel des Freilaufkreises beim Erfassen einer Asymmetrie zwischen den Gleichspannungen oder Ladungen an den Zwischenkreiskondensatoren über eine komplette Halbwelle der Wechselspannung geöffnet.

Die erfindungsgemäße Wechselrichterschaltung zum Umwandeln einer Gleichspannung einer Gleichspannungsquelle in eine Wechselspannung weist auf: einen Gleichspannungszwischenkreis, der eine Reihenschaltung aus einem ersten und einem zweiten Zwischenkreiskondensator zwischen einem ersten und einem zweiten Gleichspannungsanschluss der einen Gleichspannungsquelle aufweist; wenigstens einen Brückenzweig, der eine Reihenschaltung aus einem ersten und einem zweiten Schaltelement zwischen dem ersten und dem zweiten Gleichspannungsanschluss der einen Gleichspannungsquelle aufweist, wobei dem ersten und dem zweiten Schaltelement eine erste bzw. eine zweite Diode antiparallel geschaltet sind; wenigstens einen Freilaufkreis mit einem Schaltmittel zwischen einem gemeinsamen Gleichspannungsknotenpunkt des Gleichspannungszwischenkreises und einem gemeinsamen Wechselspannungsknotenpunkt des Brückenzweiges; einen ersten Wechselspannungsanschluss, der mit dem Gleichspannungsknotenpunkt verbunden ist, und einen zweiten Wechselspannungsanschluss, der mit dem Wechselspannungsknotenpunkt verbunden ist; und eine Messeinrichtung zum Erfassen der an den Zwischenkreiskondensatoren anliegenden Gleichspannungen oder Ladungen. Diese Wechselrichterschaltung ist weiter gekennzeichnet durch eine Steuereinrichtung, welche das Schaltmittel des Freilaufkreises und die Schaltelemente des Brückenzweiges grundsätzlich im Takt einer negativen und einer positiven Halbwelle der Wechselspannung öffnetund schließt, d.h. einander entsprechend taktet, die Schaltelemente des Brückenzweiges abweichend von ihrem grundsätzlichen Takt um einen Nulldurchgang von Wechselspannung und/oder -strom herum öffnet, und das Schaltmittel des Freilaufkreises abweichend von seinem grundsätzlich Takt im Bereich eines Nulldurchgangs von Wechselspannung und/oder -strom öffnet ist, falls sie eine Asymmetrie zwischen den Gleichspannungen oder Ladungen an den Zwischenkreiskondensatoren erfasst.

Bezüglich der erfindungsgemäßen Merkmale, Funktionsweisen sowie deren Vorteile und Begriffsdefinitionen wird auf die obigen Ausführungen in Zusammenhang mit dem erfindungsgemäßen Verfahren verwiesen.

Unter einer Messeinrichtung zum Erfassen der an den Zwischenkreiskondensatoren anliegenden Gleichspannungen oder Ladungen soll in diesem Zusammenhang jede Art von Messeinrichtungen verstanden werden, die geeignet ist, eine an einem Kondensator abfallende bzw. anliegende Gleichspannung zu erfassen. Zu diesen Messeinrichtungen zählen vorzugsweise Spannungsmesser, Ladungsmesser und auch Strommesser.

In einer bevorzugten Ausführungsform der Erfindung weist die Steuereinrichtung eine Vergleichsvorrichtung zum Vergleichen eines Unterschiedes zwischen den durch die Messeinrichtung erfassten Gleichspannungen oder Ladungen an den Zwischenkreiskondensatoren auf. Die Steuereinrichtung öffnet dann die Schaltelemente des Freilaufkreises im Bereich eines Nulldurchgangs der Wechselspannung und/oder des Wechselstroms, um so deren Taktung zu verändern, falls der von der Vergleichsvorrichtung ermittelte Unterschied zwischen den erfassten Gleichspannungen oder Ladungen an den Zwischenkreiskondensatoren einen vorbestimmten Wert übersteigt.

In einer bevorzugten Ausführungsform der Erfindung öffnet die Steuereinrichtung die Schaltelemente des Freilaufkreises im Bereich eines Nulldurchgangs der Wechselspannung und/oder des Wechselstroms in Abhängigkeit von einem Ausmaß der erfassten Asymmetrie zwischen den Gleichspannungen oder Ladungen an den Zwischenkreiskondensatoren.

In einer weiteren bevorzugten Ausführungsform der Erfindung ist der zweite Wechselspannungsanschluss über wenigstens eine Speicherdrossel mit dem Wechselspannungsknotenpunkt verbunden.

In einer weiteren bevorzugten Ausführungsform der Erfindung öffnet die Steuereinrichtung die Schaltelemente des Brückenzweiges um einen Nulldurchgang von Wechselspannung und/oder -strom herum in Abhängigkeit von der an den Gleichspannungsanschlüssen anliegenden Gleichspannung und/oder der Ausgangsleistung und/oder des Ausgangsstroms des Wechselrichters (vgl. DE 10 2007 058 633 A1).

In einer vorteilhaften Alternative ist das Schaltmittel des Freilaufkreises eine Reihenschaltung und/oder Parallelschaltung aus einem dritten und einem vierten Schaltelement, wobei dem dritten und dem vierten Schaltelement eine dritte bzw. eine vierte Diode in Reihe oder parallel geschaltet sind, oder das Schaltmittel ein bidirektionalen Schalter ist, beispielsweise einen Halbleiterschalter, wie einen High Electron Mobility Transistor (HEMT).

Das oben beschriebene Verfahren zum Betreiben eines Wechselrichters und die oben beschriebene Wechselrichterschaltung sind in besonders vorteilhafter Weise für einen Wechselrichter einsetzbar, an dessen Gleichspannungsanschlüssen wenigstens eine Photovoltaik-Gleichspannungsquelle, Brennstoffzelle, Batterie, elektromotorischer Generator oder dergleichen angeschlossen ist.

Obige sowie weitere Merkmale und Vorteile der Erfindung werden aus der nachfolgenden Beschreibung eines bevorzugten, nicht-einschränkenden Ausführungsbeispiels unter Bezugnahme auf die beiliegenden Zeichnungen besser verständlich. Darin zeigen:
- Fig. 1: ein Blockschaltbild einer einphasigen Wechselrichterschaltung mit einem Brückenzweig gemäß einem bevorzugten Ausführungsbeispiel in einem Zustand getakteter Schaltelemente des Brückenzweiges und getakteter Schaltelemente des Freilaufkreises;
- Fig. 2: ein Blockschaltbild der Wechselrichterschaltung von Figur 1 in einem Zustand nicht getakteter Schaltelemente des Brückenzweiges und getakteter Schaltelemente des Freilaufkreises;
- Fig. 3: ein Blockschaltbild der Wechselrichterschaltung von Figur 1 in einem Zustand nicht getakteter Schaltelemente des Brückenzweiges und nicht getakteter Schaltelemente des Freilaufkreises; und
- Fig. 4: ein Diagramm zur Veranschaulichung der Symmetrierung des Gleichspannungszwischenkreises der Wechselrichterschaltung der Figuren 1-3.

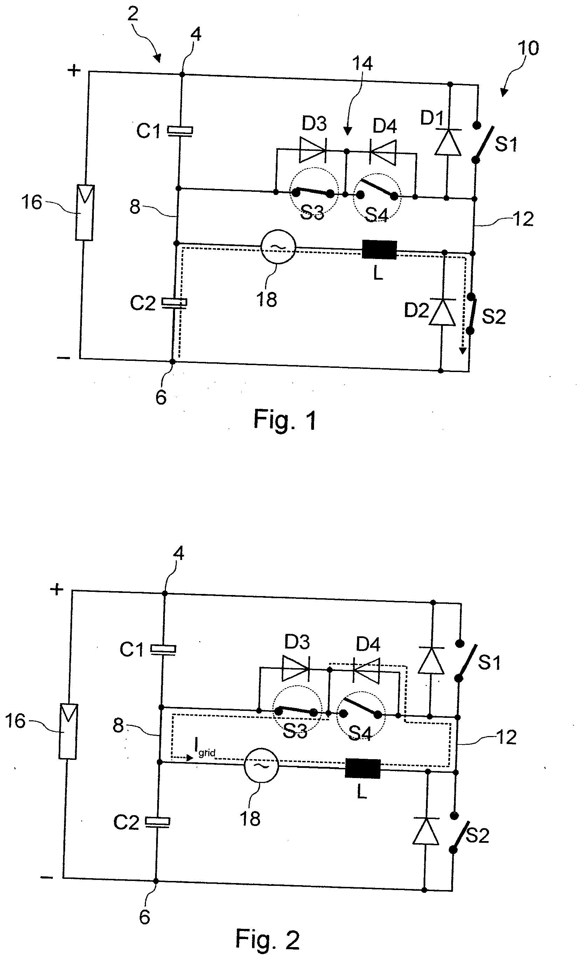

In Figur 1 ist eine NPC-Wechselrichterschaltung zum Umwandeln einer Gleichspannung, welche von einer Photovoltaik-Gleichspannungsquelle 16 zur Verfügung gestellt wird, in eine Wechselspannung, welche in ein Netz 18 eingespeist wird, dargestellt. In dem Ausführungsbeispiel von Figur 1 handelt es sich um eine einphasige Wechselrichterschaltung mit einem Brückenzweig; die Wechselrichterschaltung ist jedoch einfach auf mehrere Phasen und/oder mehrere Brückenzweige erweiterbar.

Die Wechselrichterschaltung weist einen Gleichspannungszwischenkreis 2 auf, der aus einem ersten Zwischenkreiskondensator C1 und einem zweiten Zwischenkreiskondensator C2 aufgebaut ist. Der erste und der zweite Zwischenkreiskondensator C1, C2 sind in Reihe zwischen einen ersten Gleichspannungsanschluss 4 und einen zweiten Gleichspannungsanschluss 6 geschaltet, mit denen die Gleichspannungsquelle 16 verbunden ist. Der gemeinsame Gleichspannungsknotenpunkt 8 ist an der Verbindung zwischen den beiden Zwischenkreiskondensatoren C1, C2 angeordnet.

Die an den Zwischenkreiskondensatoren C1, C2 anliegenden Gleichspannungen oder Ladungen können mittels einer geeigneten Messeinrichtung (nicht dargestellt) erfasst werden. Die Messeinrichtung führt die erfassten Gleichspannungen oder Ladungen einer Steuereinrichtung (nicht dargestellt) zu, welche diese Gleichspannungen oder Ladungen miteinander vergleicht und auf Basis dieses Vergleiches ggf. eine Asymmetrie des Gleichspannungszwischenkreises feststellt.

Mit den beiden Gleichspannungsanschlüssen 4, 6 ist ferner ein Brückenzweig 10 verbunden. Dieser Brückenzweig 10 ist aus einem ersten Schaltelement S1 und einem zweiten Schaltelement S2 aufgebaut, die in Reihe zwischen die Gleichspannungsanschlüsse 4, 6 geschaltet sind. Dem ersten Schaltelement S1 ist eine erste Diode D1 antiparallel geschaltet und dem zweiten Schaltelement S2 ist eine zweite Diode D2 antiparallel geschaltet. Die Durchlassrichtungen dieser beiden Dioden D1, D2 des Brückenzweiges 10 sind zueinander gleich gewählt. Das erste Schaltelement S1 und die erste Diode D1 bilden mit dem zweiten Schaltelement S2 und der zweiten Diode D2 eine Halbbrücke des Brückenzweiges 10.

Der Wechselspannungsknotenpunkt 12 ist an der Verbindung zwischen den beiden Schaltelementen S1, S2 des Brückenzweiges 10 angeordnet. Ein erster Wechselspannungsanschluss ist mit dem Gleichspannungsknotenpunkt 8 verbunden, ein zweiter Wechselspannungsanschluss ist über eine Speicherdrossel L mit dem Wechselspannungsknotenpunkt 12 verbunden. An diese beiden Wechselspannungsanschlüssen kann zum Beispiel ein Netz 18 oder ein Verbraucher angeschlossen werden.

Die Wechselrichterschaltung enthält ferner einen Freilaufkreis 14. Dieser Freilaufkreis 14 ist aus einem dritten Schaltelement S3 und einem vierten Schaltelement S4 aufgebaut, die in Reihe zwischen den Gleichspannungsknotenpunkt 8 und den Wechselspannungsknotenpunkt 12 geschaltet sind. Dem dritten Schaltelement S3 ist eine dritte Diode D3 antiparallel geschaltet und dem vierten Schaltelement S4 ist eine vierte Diode D4 antiparallel geschaltet. Die Durchlassrichtungen dieser beiden Dioden D3, D4 des Freilaufkreises 14 sind entgegengesetzt zueinander gewählt.

In Figur 1 ist der Normalzustand der Wechselrichterschaltung dargestellt, wenn sowohl die Schaltelemente S1, S2 des Brückenzweiges 10 als auch die Schaltelemente S3, S4 des Freilaufkreises 14 von der Steuereinrichtung getaktet werden. Zu dem in Figur 1 dargestellten Zeitpunkt ist beispielsweise das zweite Schaltelement S2 des Brückenzweiges 10 geschlossen, während das erste Schaltelement S1 des Brückenzweiges 10 offen ist (negative Halbwelle der Wechselspannung). Im gleichen Takt ist das dritte Schaltelement S3 des Freilaufkreises 14 geschlossen und ist das vierte Schaltelement S4 des Freilaufkreises 14 offen. In diesem Zustand fließt ein Strom von dem zweiten Zwischenkreiskondensator C2 durch das geschlossene zweite Schaltelement S2 und die Speicherdrossel L zum Netz 18, wie durch den Pfeil in Figur 1 angedeutet. In der anderen Netzhalbwelle (S1 geschlossen, S2 offen, S3 offen, S4 geschlossen) fließt ein Strom von dem ersten Zwischenkreiskondensator C1 durch das geschlossene erste Schaltelement S1 und die Speicherdrossel L zum Netz 18.

Wie in der DE 10 2007 058 633 A1 ausführlich erläutert, ist es insbesondere bei kleiner Leistungsabgabe des Wechselrichters von Vorteil, die hochfrequente Taktung der Schaltelemente S1, S2 des Brückenzweiges 10 um einen Nulldurchgang von Wechselspannung und/oder -strom herum für eine Zeitdauer abzuschalten, die von der an den Gleichspannungsanschlüssen 4, 6 anliegenden Gleichspannung und/oder der Ausgangsleistung des Wechselrichters abhängt.

In einem nicht dargestellten, alternativen Ausführungsbeispiel enthält der Freilaufkreis 14 als Schaltmittel einen bidirektionalen Schalter, der abhängig von den Halbbrückenschaltern S1, S2 getaktet wird. Die Funktionsweise des derart ausgestalteten Freilaufkreises 14 ist analog zur beschriebenen Funktionsweise.

Figur 2 zeigt die oben beschriebene Wechselrichterschaltung in diesem Zustand, wenn die Steuereinrichtung die Taktung der Schaltelemente S1, S2 des Brückenzweiges 10 abschaltet, d.h. beide Schaltelement S1, S2 offen ansteuert (Freilauf).

Im Normalzustand, d.h. wenn die Steuereinrichtung keine Asymmetrie des Gleichspannungszwischenkreises 2 festgestellt hat, werden die Schaltelemente S3, S4 des Freilaufkreises 14 auch während der Abschaltung der Taktung der Schaltelemente S1, S2 des Brückenzweiges 10 weiter mit einem Tastverhältnis von 50% zum Nulldurchgang von Wechselspannung und/oder -strom geschaltet. So erfolgt der Freilauf des Wechselrichters zum Beispiel während der negativen Halbwelle von der Speicherdrossel L über die vierte Diode D4 und das dritte Schaltelement S3 des Freilaufkreises 14, wie in Figur 2 durch den Pfeil angedeutet. In der positiven Halbwelle würde der Freilauf des Wechselrichters entsprechend von der Speicherdrossel L über das vierte Schaltelement S4 und die dritte Diode D3 des Freilaufkreises 14 erfolgen.

Falls die Steuereinrichtung mithilfe der Messeinrichtung jedoch eine Asymmetrie des Gleichspannungszwischenkreises 2 feststellt, steuert sie die Schaltelemente S3, S4 des Freilaufkreises 14 so an, dass der Freilauf des Wechselrichters um den Nulldurchgang von Wechselspannung und/oder -strom herum in der Art des klassischen Wechselrichters ohne Freilaufkreis 14 erfolgt. D.h. die Steuereinrichtung schaltet die Taktung der beiden Schaltelemente S3, S4 des Freilaufkreises 14 im Bereich des Nulldurchgangs der Wechselspannung und/oder des -stroms ab, sodass beide Schaltelemente S3 und S4 offen sind und keinen Stromfluss über den Freilaufkreis 14 ermöglichen.

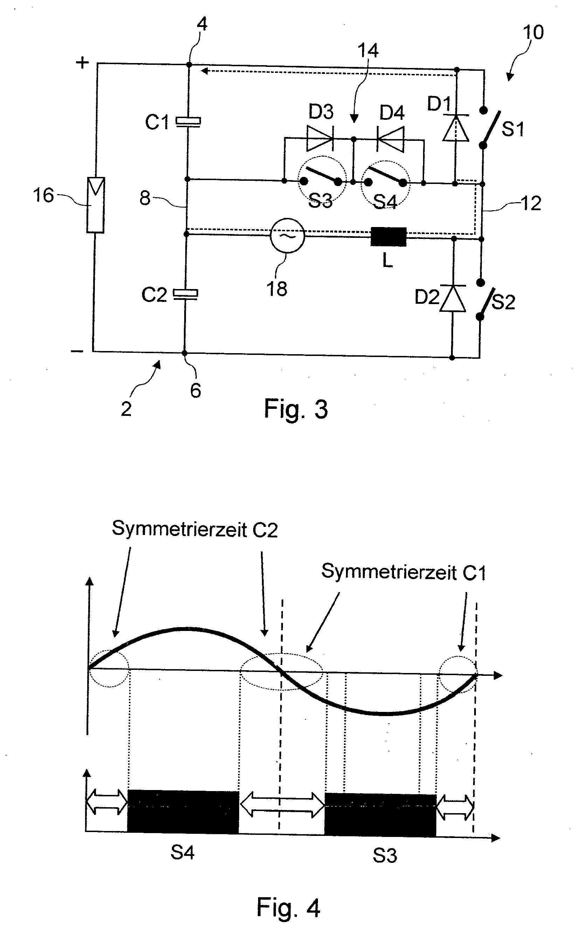

Wie in Figur 3 durch den Pfeil angedeutet, erfolgt der Freilauf deshalb zum Beispiel während der negativen Halbwelle von der Speicherdrossel L über die erste Diode D1 des Brückenzweiges 10 zum ersten Zwischenkreiskondensator C1. Somit wird während dieser Freilaufphase Energie aus der Speicherdrossel L in den ersten Zwischenkreiskondensator C1 gefördert, um eine Symmetrierung der beiden Zwischenkreiskondensatoren C1, C2 zu erzielen. Dies kann über mehrere Perioden und/oder Phasen der Wechselspannung und/oder des - stroms erfolgen. Hierbei kann die Taktung des/der Freilaufkreise auch über eine komplette Halbwelle abgeschaltet werden. Nach auf diese Weise erfolgter Symmetrierung des Gleichspannungszwischenkreises 2 wird der Freilauf des Wechselrichters von der Steuereinrichtung wieder gemäß dem "normalen" Schaltzustand von Figur 2 durchgeführt.

Die Zeitdauer dieser Symmetrierungsphase wird von der Steuereinrichtung in Abhängigkeit von dem Ausmaß der festgestellten Asymmetrie des Gleichspannungszwischenkreises 2 bestimmt. Außerdem wird in Abhängigkeit davon, an welchem Zwischenkreiskondensator C1 oder C2 eine größere Gleichspannung anliegt, die Symmetrierung in der positiven Halbwelle oder der negativen Halbwelle der Wechselspannung durchgeführt. Das Abschalten der Taktung des jeweiligen Schaltelements S3, S4 des Freilaufkreises 14 bedeutet dabei ein späteres Einschalten und/oder früheres Ausschalten des jeweiligen Schaltelements S3, S4. Die möglichen Zeiten für einen solchen Symmetrierungsvorgang sind in dem Diagramm von Figur 4 nochmals veranschaulicht.

Das beschriebene Verfahren kann auch dazu verwendet werden, eine Asymmetrie vorzugeben oder zu verändern.

## Patentansprüche

1. Verfahren zum Betreiben eines Wechselrichters, insbesondere eines NPC-Wechselrichters, zum Umwandeln einer Gleichspannung einer Gleichspannungsquelle (16) in eine Wechselspannung mit einem Gleichspannungszwischenkreis (2), der eine Reihenschaltung aus einem ersten und einem zweiten Zwischenkreiskondensator (C1, C2) zwischen einem ersten und einem zweiten Gleichspannungsanschluss (4, 6) der einen Gleichspannungsquelle (16) aufweist, wenigstens einem Brückenzweig (10), der eine Reihenschaltung aus einem ersten und einem zweiten Schaltelement (S1, S2) zwischen dem ersten und dem zweiten Gleichspannungsanschluss (4, 6) der einen Gleichspannungsquelle (16) aufweist, wobei dem ersten und dem zweiten Schaltelement (S1, S2) eine erste bzw. eine zweite Diode (D1, D2) antiparallel geschaltet sind, wenigstens einem Freilaufkreis (14) mit einem Schaltmittel (S3, S4, D3, D4) zwischen einem gemeinsamen Gleichspannungsknotenpunkt (8) des Gleichspannungszwischenkreises (2) und einem gemeinsamen Wechselspannungsknotenpunkt (12) des Brückenzweiges (10), einem ersten Wechselspannungsanschluss, der mit dem Gleichspannungsknotenpunkt (8) verbunden ist, und einem zweiten Wechselspannungsanschluss, der mit dem Wechselspannungsknotenpunkt (12) verbunden ist, **dadurch gekennzeichnet, dass**
das Schaltmittel (S3, S4, D3, D4) des Freilaufkreises (14) und die Schaltelemente (S1, S2) des Brückenzweiges (10) grundsätzlich im Takt einer negativen und einer positiven Halbwelle der Wechselspannung geöffnet und geschlossen werden;
die an den Zwischenkreiskondensatoren (C1, C2) anliegenden Gleichspannungen oder Ladungen erfasst werden;
die Schaltelemente (S1, S2) des Brückenzweiges (10) abweichend von ihrem grundsätzlichen Takt um einen Nulldurchgang von Wechselspannung und/oder -strom herum geöffnet werden; und
das Schaltmittel (S3, S4, D3, D4) des Freilaufkreises (14) abweichend von seinem grundsätzlichen Takt um einen Nulldurchgang von Wechselspannung und/oder -strom herum geöffnet wird, falls eine Asymmetrie zwischen den Gleichspannungen oder Ladungen an den Zwischenkreiskondensatoren (C1, C2) erfasst wird.

2. Verfahren nach Anspruch 1,
**dadurch gekennzeichnet, dass**
das Schaltmittel (S3, S4, D3, D4) des Freilaufkreises (14) um einen Nulldurchgang von Wechselspannung und/oder -strom herum geöffnet wird, falls ein Unterschied zwischen den erfassten Gleichspannungen oder Ladungen an den Zwischenkreiskondensatoren (C1, C2) einen vorbestimmten Wert übersteigt.

3. Verfahren nach Anspruch 1 oder 2,
**dadurch gekennzeichnet, dass**
das Öffnen des Schaltmittels (S3, S4, D3, D4) des Freilaufkreises (14) um einen Nulldurchgang von Wechselspannung und/oder -strom herum in Abhängigkeit von einem Ausmaß der erfassten Asymmetrie zwischen den Gleichspannungen oder Ladungen an den Zwischenkreiskondensatoren (C1, C2) durchgeführt wird.

4. Verfahren nach einem der Ansprüche 1 bis 3,
**dadurch gekennzeichnet, dass**
das Öffnen der Schaltelemente (S1, S2) des Brückenzweiges (10) um einen Nulldurchgang von Wechselspannung und/oder -strom herum in Abhängigkeit von der an den Gleichspannungsanschlüssen (4, 6) anliegenden Gleichspannung und/oder des Ausgangsstromes und/oder der Ausgangsleistung des Wechselrichters durchgeführt wird.

5. Verfahren nach einem der Ansprüche 1 bis 4,
**dadurch gekennzeichnet, dass**
die Schaltelemente (S1, S2) des Brückenzweiges (10) und/oder das Schaltmittel (S3, S4, D3, D4) des Freilaufkreises (14) in der Halbwelle der Wechselspannung geöffnet werden, in welcher der Kondensator (C1, C2) des Zwischenkreises (2) mit der größeren Ladung und/oder Spannung entladen wird.

6. Verfahren nach einem der vorhergehenden Ansprüche,
**dadurch gekennzeichnet, dass**
das Schaltmittel (S3, S4, D3, D4) des Freilaufkreises (14) beim Erfassen einer Asymmetrie zwischen den Gleichspannungen oder Ladungen an den Zwischenkreiskondensatoren (C1, C2) über eine komplette Halbwelle der Wechselspannung geöffnet wird.

7. Wechselrichterschaltung, insbesondere NPC-Wechselrichterschaltung, zum Umwandeln einer Gleichspannung einer Gleichspannungsquelle (16) in eine Wechselspannung, mit
einem Gleichspannungszwischenkreis (2), der eine Reihenschaltung aus einem ersten und einem zweiten Zwischenkreiskondensator (C1, C2) zwischen einem ersten und einem zweiten Gleichspannungsanschluss (4, 6) der einen Gleichspannungsquelle (16) aufweist;
wenigstens einem Brückenzweig (10), der eine Reihenschaltung aus einem ersten und einem zweiten Schaltelement (S1, S2) zwischen dem ersten und dem zweiten Gleichspannungsanschluss (4, 6) der einen Gleichspannungsquelle (16) aufweist, wobei dem ersten und dem zweiten Schaltelement (S1, S2) eine erste bzw. eine zweite Diode (D1, D2) antiparallel geschaltet sind;
wenigstens einem Freilaufkreis (14) mit einem Schaltmittel (S3, S4, D3, D4) zwischen einem gemeinsamen Gleichspannungsknotenpunkt (8) des Gleichspannungszwischenkreises (2) und einem gemeinsamen Wechselspannungsknotenpunkt (12) des Brückenzweiges (10);
einem ersten Wechselspannungsanschluss, der mit dem Gleichspannungsknotenpunkt (8) verbunden ist, und einem zweiten Wechselspannungsanschluss, der mit dem Wechselspannungsknotenpunkt (12) verbunden ist; und
einer Messeinrichtung zum Erfassen der an den Zwischenkreiskondensatoren (C1, C2) anliegenden Gleichspannungen oder Ladungen,
**gekennzeichnet durch**
eine Steuereinrichtung, welche das Schaltmittel (S3, S4, D3, D4) des Freilaufkreises (14) und die Schaltelemente (S1, S2) des Brückenzweiges grundsätzlich im Takt einer negativen und einer positiven Halbwelle der Wechselspannung öffnetund schließt, die Schaltelemente (S1, S2) des Brückenzweiges (10) abweichend von ihrem grundsätzlichen Takt um einen Nulldurchgang von Wechselspannung und/oder -strom herum öffnet, und das Schaltmittel (S3, S4, D3, D4) des Freilaufkreises (14) abweichend von seinem grundsätzlichen Takt um einen Nulldurchgang von Wechselspannung und/oder -strom herum öffnet, falls sie eine Asymmetrie zwischen den Gleichspannungen oder Ladungen an den Zwischenkreiskondensatoren (C1, C2) erfasst.

8. Wechselrichterschaltung nach Anspruch 7,
**dadurch gekennzeichnet, dass**
die Steuereinrichtung eine Vergleichsvorrichtung zum Vergleichen eines Unterschiedes zwischen den durch die Messeinrichtung erfassten Gleichspannungen und/oder Ladungen an den Zwischenkreiskondensatoren (C1, C2) aufweist; und
die Steuereinrichtung das Schaltmittel (S3, S4, D3, D4) des Freilaufkreises (14) um einen Nulldurchgang von Wechselspannung und/oder -strom herum öffnet, falls der von der Vergleichsvorrichtung ermittelte Unterschied zwischen den erfassten Gleichspannungen oder Ladungen an den Zwischenkreiskondensatoren (C1, C2) einen vorbestimmten Wert übersteigt.

9. Wechselrichterschaltung nach Anspruch 7 oder 8,
**dadurch gekennzeichnet, dass**
die Steuereinrichtung das Schaltmittel (S3, S4, D3, D4) des Freilaufkreises (14) um einen Nulldurchgang von Wechselspannung und/oder -strom herum in Abhängigkeit von einem Ausmaß der erfassten Asymmetrie zwischen den Gleichspannungen oder Ladungen an den Zwischenkreiskondensatoren (C1, C2) öffnet.

10. Wechselrichterschaltung nach einem der Ansprüche 7 bis 9,
**dadurch gekennzeichnet, dass**
der zweite Wechselspannungsanschluss über eine Speicherdrossel (L) mit dem Wechselspannungsknotenpunkt (12) verbunden ist.

11. Wechselrichterschaltung nach einem der Ansprüche 7 bis 10,
**dadurch gekennzeichnet, dass**
die Steuereinrichtung die Schaltelemente (S1, S2) des Brückenzweiges (10) um einen Nulldurchgang von Wechselspannung und/oder -strom herum in Abhängigkeit von der an den Gleichspannungsanschlüssen (4, 6) anliegenden Gleichspannung und/oder der Ausgangsleistung und/oder des Ausgangsstroms des Wechselrichters öffnet.

12. Wechselrichterschaltung nach einem der Ansprüche 7 bis 11,
**dadurch gekennzeichnet, dass**
das Schaltmittel des Freilaufkreises (14) eine Reihenschaltung und/oder Parallelschaltung aus einem dritten und einem vierten Schaltelement (S3, S4) ist, wobei dem dritten und dem vierten Schaltelement (S3, S4) eine dritte bzw. eine vierte Diode (D3, D4) in Reihe oder parallel geschaltet sind, oder das Schaltmittel ein bidirektionalen Schalter ist, beispielsweise einen Halbleiterschalter, wie einen High Electron Mobility Transistor (HEMT).

13. Verwendung des Verfahrens nach einem der Ansprüche 1 bis 6 oder einer Wechselrichterschaltung nach einem der Ansprüche 7 bis 12 für einen Wechselrichter, an dessen Gleichspannungsanschlüssen (4, 6) wenigstens eine Photovoltaik-Gleichspannungsquelle, Brennstoffzelle, Batterie, elektromotorischer Generator oder dergleichen angeschlossen ist.

## Claims

1. Method for operating an inverter, in particular an NPC inverter, for converting a DC voltage of a DC voltage source (16) into an AC voltage, comprising a DC-voltage DC link (2), which has a series circuit of a first and a second DC link capacitor (C1, C2) between a first and a second DC voltage terminal (4, 6) of the one DC voltage source (16), at least one bridge branch (10), which has a series circuit of a first and a second switching element (S1, S2) between the first and the second DC voltage terminal (4, 6) of the one DC voltage source (16), a first and a second diode (D1, D2) being wired in antiparallel with the first and second switching elements (S1, S2), respectively, at least one free-wheeling circuit (14), which has a switching means (S3, S4, D3, D4) between a common DC voltage node point (8) of the DC-voltage DC link (2) and a common AC voltage node point (12) of the bridge branch (10), a first AC voltage terminal, which is connected to the DC voltage node point (8), and a second AC voltage terminal, which is connected to the AC voltage node point (12),
**characterised in that**
the switching means (S3, S4, D3, D4) of the free-wheeling circuit (14) and the switching elements (S1, S2) of the bridge branch (10) are basically opened and closed with the clock signal of a negative and a positive half-wave of the AC voltage;
the DC voltages or charges applied at the DC link capacitors (C1, C2) are detected;
the switching elements (S1, S2) of the bridge branch (10) are opened around a zero crossing of AC voltage and/or alternating current, in a manner deviating from their basic clock signal; and
the switching means (S3, S4, D3, D4) of the free-wheeling circuit (14) is opened around a zero crossing of AC voltage and/or alternating current, in a manner deviating from the basic clock signal of said switching means, if an asymmetry is detected between the DC voltages or charges at the DC link capacitors (C1, C2).

2. Method according to claim 1,
**characterised in that**
the switching means (S3, S4, D3, D4) of the free-wheeling circuit (14) is opened around a zero crossing of AC voltage and/or alternating current if a difference between the detected DC voltages or charges at the DC link capacitors (C1, C2) exceeds a predetermined value.

3. Method according to either claim 1 or claim 2,
**characterised in that**
the switching means (S3, S4, D3, D4) of the free-wheeling circuit (14) is opened around a zero crossing of AC voltage and/or alternating current depending on a magnitude of the detected asymmetry between the DC voltages or charges at the DC link capacitors (C1, C2).

4. Method according to any of claims 1 to 3,
**characterised in that**
the switching elements (S1, S2) of the bridge branch (10) are opened around a zero crossing of AC voltage and/or alternating current depending on the DC voltage applied at the DC voltage terminals (4, 6) and/or on the output current and/or the output power of the inverter.

5. Method according to any of claims 1 to 4,
**characterised in that**
the switching elements (S1, S2) of the bridge branch (10) and/or the switching means (S3, S4, D3, D4) of the free-wheeling circuit (14) are opened in the AC voltage half-wave in which the capacitor (C1, C2) of the DC link (2) having the higher charge and/or voltage is discharged.

6. Method according to any of the preceding claims, **characterised in that** the switching means (S3, S4, D3, D4) of the free-wheeling circuit (14) is opened over an entire half-wave of the AC voltage when an asymmetry is detected between the DC voltages or charges at the DC link capacitors (C1, C2).

7. Inverter circuit, in particular an NPC inverter circuit, for converting a DC voltage of a DC voltage source (16) into an AC voltage, comprising
a DC-voltage DC link (2), which has a series circuit of a first and a second DC link capacitor (C1, C2) between a first and a second DC voltage terminal (4, 6) of the one DC voltage source (16);
at least one bridge branch (10), which has a series circuit of a first and a second switching element (S1, S2) between the first and the second DC voltage terminal (4, 6) of the one DC voltage source (16), a first and a second diode (D1, D2) being wired in antiparallel with the first and second switching elements (S1, S2), respectively;
at least one free-wheeling circuit (14), which has a switching means (S3, S4, D3, D4) between a common DC voltage node point (8) of the DC-voltage DC link (2) and a common AC voltage node point (12) of the bridge branch (10);
a first AC voltage terminal, which is connected to the DC voltage node point (8), and a second AC voltage terminal, which is connected to the AC voltage node point (12); and
a measuring device for detecting the DC voltages or charges applied at the DC link capacitors (C1, C2),
**characterised by**
a control device that opens and closes the switching means (S3, S4, D3, D4) of the free-wheeling circuit (14) and the switching elements (S1, S2) of the bridge branch basically with the clock signal of a negative and a positive half-wave of the AC voltage, opens the switching elements (S1, S2) of the bridge branch (10) around a zero crossing of AC voltage and/or alternating current, in a manner deviating from their basic clock signal, and opens the switching means (S3, S4, D3, D4) of the free-wheeling circuit (14) around a zero crossing of AC voltage and/or alternating current, in a manner deviating from the basic clock signal of said switching means, if it detects an asymmetry between the DC voltages or charges at the DC link capacitors (C1, C2).

8. Inverter circuit according to claim 7,
**characterised in that**
the control device has a comparison apparatus for comparing a difference between the DC voltages and/or charges detected by the measuring device at the DC link capacitors (C1, C2); and
the control device opens the switching means (S3, S4, D3, D4) of the free-wheeling circuit (14) around a zero crossing of AC voltage and/or alternating current if the difference identified by the comparison apparatus between the detected DC voltages or charges at the DC link capacitors (C1, C2) exceeds a predetermined value.

9. Inverter circuit according to either claim 7 or claim 8,
**characterised in that**
the control device opens the switching means (S3, S4, D3, D4) of the free-wheeling circuit (14) around a zero crossing of AC voltage and/or alternating current depending on a magnitude of the detected asymmetry between the DC voltages or charges at the DC link capacitors (C1, C2).

10. Inverter circuit according to any of claims 7 to 9,
**characterised in that**
the second AC voltage terminal is connected to the AC voltage node point (12) by means of a storage inductor (L).

11. Inverter circuit according to any of claims 7 to 10,
**characterised in that**
the control device opens the switching elements (S1, S2) of the bridge branch (10) around a zero crossing of AC voltage and/or alternating current depending on the DC voltage applied at the DC voltage terminals (4, 6) and/or on the output power and/or the output current of the inverter.

12. Inverter circuit according to any of claims 7 to 11,
**characterised in that**
the switching means of the free-wheeling circuit (14) is a series circuit and/or a parallel circuit of a third and a fourth switching element (S3, S4), a third and a fourth diode (D3, D4) being wired in series or in parallel with the third and fourth switching elements (S3, S4), respectively, or the switching means is a bidirectional switch, for example a semiconductor switch, such as a high-electron-mobility transistor (HEMT).

13. Use of the method according to any of claims 1 to 6 or of an inverter circuit according to any of claims 7 to 12 for an inverter to the DC voltage terminals (4, 6) of which there is connected at least one photovoltaic DC voltage source, fuel cell, battery, electromotive generator or the like.

## Revendications

1. Procédé d'actionnement d'un onduleur, en particulier d'un onduleur NPC destiné à convertir, en une tension alternative, une tension continue d'une source (16) de tension continue, comprenant un circuit intermédiaire (2) de tension continue, muni d'un branchement en série de premier et second condensateurs (C1, C2) dudit circuit intermédiaire entre des première et seconde connexions (4, 6) de tension continue de l'une (16) des sources de tension continue ; au moins une branche de pont (10) dotée d'un branchement en série de premier et deuxième éléments de commutation (S1, S2) entre lesdites première et seconde connexions (4, 6) de tension continue de l'une (16) des sources de tension continue, des première et deuxième diodes (D1, D2) étant respectivement connectées auxdits premier et deuxième éléments de commutation (S1, S2) avec montage antiparallèle ; au moins un circuit de roue libre (14), pourvu d'un moyen de commutation (S3, S4, D3, D4) entre un point nodal commun (8) de tension continue dudit circuit intermédiaire (2) de tension continue et un point nodal commun (12) de tension alternative de ladite branche de pont (10) ; une première connexion de tension alternative, raccordée audit point nodal (8) de tension continue ; et une seconde connexion de tension alternative, raccordée audit point nodal (12) de tension alternative, **caractérisé par le fait**
**que** le moyen de commutation (S3, S4, D3, D4) du circuit de roue libre (14) et les éléments de commutation (S1, S2) de la branche de pont (10) sont fondamentalement ouverts et fermés en cadence avec des demi-ondes négative et positive de la tension alternative ;
**qu'**il s'opère une détection des tensions continues ou des charges appliquées aux condensateurs (C1, C2) du circuit intermédiaire ;
**que** lesdits éléments de commutation (S1, S2) de la branche de pont (10), s'écartant de leur cadencement fondamental, sont ouverts dans l'environnement d'un passage par zéro de tension alternative et/ou de courant alternatif ; et
**que** ledit moyen de commutation (S3, S4, D3, D4) du circuit de roue libre (14), s'écartant de son cadencement fondamental, est ouvert dans l'environnement d'un passage par zéro de tension alternative et/ou de courant alternatif dans le cas où une asymétrie est détectée entre lesdites tensions continues ou lesdites charges appliquées auxdits condensateurs (C1, C2) du circuit intermédiaire.

2. Procédé selon la revendication 1,
**caractérisé par le fait que**
le moyen de commutation (S3, S4, D3, D4) du circuit de roue libre (14) est ouvert, dans l'environnement d'un passage par zéro de tension alternative et/ou de courant alternatif, dans le cas où une différence entre les tensions continues ou les charges détectées, appliquées aux condensateurs (C1, C2) du circuit intermédiaire, excède une valeur prédéterminée.

3. Procédé selon la revendication 1 ou 2,
**caractérisé par le fait que**
l'ouverture du moyen de commutation (S3, S4, D3, D4) du circuit de roue libre (14) est effectuée, dans l'environnement d'un passage par zéro de tension alternative et/ou de courant alternatif, en fonction d'une ampleur de l'asymétrie détectée entre les tensions continues ou les charges appliquées aux condensateurs (C1, C2) du circuit intermédiaire.

4. Procédé selon l'une des revendications 1 à 3,
**caractérisé par le fait que**
l'ouverture des éléments de commutation (S1, S2) de la branche de pont (10) est effectuée, dans l'environnement d'un passage par zéro de tension alternative et/ou de courant alternatif, en fonction de la tension continue appliquée aux connexions (4, 6) de tension continue, et/ou du courant de sortie et/ou de la puissance de sortie de l'onduleur.

5. Procédé selon l'une des revendications 1 à 4,
**caractérisé par le fait que**
les éléments de commutation (S1, S2) de la branche de pont (10), et/ou le moyen de commutation (S3, S4, D3, D4) du circuit de roue libre (14), est (sont) ouvert(s) dans la demi-onde de la tension alternative dans laquelle le condensateur (C1, C2) du circuit intermédiaire (2) est déchargé avec la charge et/ou la tension maximale(s).

6. Procédé selon l'une des revendications précédentes,
**caractérisé par le fait que**
le moyen de commutation (S3, S4, D3, D4) du circuit de roue libre (14) est ouvert sur une demi-onde intégrale de la tension alternative lors de la détection d'une asymétrie entre les tensions continues ou les charges appliquées aux condensateurs (C1, C2) du circuit intermédiaire.

7. Circuit onduleur, notamment circuit onduleur NPC destiné à convertir, en une tension alternative, une tension continue d'une source (16) de tension continue, comprenant
un circuit intermédiaire (2) de tension continue, muni d'un branchement en série de premier et second condensateurs (C1, C2) dudit circuit intermédiaire entre des première et seconde connexions (4, 6) de tension continue de l'une (16) des sources de tension continue ;
au moins une branche de pont (10) dotée d'un branchement en série de premier et deuxième éléments de commutation (S1, S2) entre lesdites première et seconde connexions (4, 6) de tension continue de l'une (16) des sources de tension continue, des première et deuxième diodes (D1, D2) étant respectivement connectées auxdits premier et deuxième éléments de commutation (S1, S2) avec montage antiparallèle ;
au moins un circuit de roue libre (14), pourvu d'un moyen de commutation (S3, S4, D3, D4) entre un point nodal commun (8) de tension continue dudit circuit intermédiaire (2) de tension continue et un point nodal commun (12) de tension alternative de ladite branche de pont (10) ;
une première connexion de tension alternative, raccordée audit point nodal (8) de tension continue, et une seconde connexion de tension alternative raccordée audit point nodal (12) de tension alternative ; et
un appareil de mesure, conçu pour détecter les tensions continues ou les charges appliquées aux condensateurs (C1, C2) du circuit intermédiaire,
**caractérisé par**
un appareil de commande qui, dans le cas où il détecte une asymétrie entre les tensions continues ou les charges appliquées aux condensateurs (C1, C2) du circuit intermédiaire, ouvre et ferme le moyen de commutation (S3, S4, D3, D4) du circuit de roue libre (14) et les éléments de commutation (S1, S2) de la branche de pont, fondamentalement en cadence avec des demi-ondes négative et positive de la tension alternative ; ouvre lesdits éléments de commutation (S1, S2) de ladite branche de pont (10) s'écartant de leur cadencement fondamental, dans l'environnement d'un passage par zéro de tension alternative et/ou de courant alternatif ; et ouvre ledit moyen de commutation (S3, S4, D3, D4) dudit circuit de roue libre (14) s'écartant de son cadencement fondamental, dans l'environnement d'un passage par zéro de tension alternative et/ou de courant alternatif.

8. Circuit onduleur selon la revendication 7,
**caractérisé par le fait que**
l'appareil de commande comporte un dispositif comparateur, conçu pour comparer une différence entre les tensions continues et/ou les charges détectées par l'appareil de mesure, appliquées aux condensateurs (C1, C2) du circuit intermédiaire ; et
ledit appareil de commande ouvre le moyen de commutation (S3, S4, D3, D4) du circuit de roue libre (14), dans l'environnement d'un passage par zéro de tension alternative et/ou de courant alternatif, dans le cas où la différence entre les tensions continues ou les charges détectées appliquées auxdits condensateurs (C1, C2) du circuit intermédiaire, spécifiée par ledit dispositif comparateur, excède une valeur prédéterminée.

9. Circuit onduleur selon la revendication 7 ou 8,
**caractérisé par le fait que**
l'appareil de commande ouvre le moyen de commutation (S3, S4, D3, D4) du circuit de roue libre (14), dans l'environnement d'un passage par zéro de tension alternative et/ou de courant alternatif, en fonction d'une ampleur de l'asymétrie détectée entre les tensions continues ou les charges appliquées aux condensateurs (C1, C2) du circuit intermédiaire.

10. Circuit onduleur selon l'une des revendications 7 à 9,
**caractérisé par le fait que**
la seconde connexion de tension alternative est raccordée au point nodal (12) de tension alternative par l'intermédiaire d'une bobine accumulatrice (L).

11. Circuit onduleur selon l'une des revendications 7 à 10,
**caractérisé par le fait que**
l'appareil de commande ouvre les éléments de commutation (S1, S2) de la branche de pont (10), dans l'environnement d'un passage par zéro de tension alternative et/ou de courant alternatif, en fonction de la tension continue appliquée aux connexions (4, 6) de tension continue, et/ou de la puissance de sortie et/ou du courant de sortie de l'onduleur.

12. Circuit onduleur selon l'une des revendications 7 à 11,
**caractérisé par le fait que**
le moyen de commutation du circuit de roue libre (14) est un branchement en série et/ou un branchement en parallèle de troisième et quatrième éléments de commutation (S3, S4), sachant que des troisième et quatrième diodes (D3, D4) sont respectivement connectées, en série ou en parallèle, auxdits troisième et quatrième éléments de commutation (S3, S4), ou bien ledit moyen de commutation est un commutateur bidirectionnel, par exemple un commutateur à semi-conducteurs tel qu'un transistor à haute mobilité électronique (HEMT).

13. Utilisation du procédé conforme à l'une des revendications 1 à 6 ou d'un circuit onduleur conforme à l'une des revendications 7 à 12, pour un onduleur aux connexions (4, 6) de tension continue duquel est raccordé(e) au moins une source de tension continue photovoltaïque, une pile à combustible, une batterie, un générateur électromotorisé, ou un élément similaire.
